**Europäisches Patentamt**

**European Patent Office**

**Office européen des brevets**

(19)

(11) Veröffentlichungsnummer: **0 078 441**
A2

# (12) EUROPÄISCHE PATENTANMELDUNG

(21) Anmeldenummer: 82109620.3

(22) Anmeldetag: 19.10.82

(51) Int. Cl.³: **H 04 N 5/76**

(30) Priorität: 22.10.81 DE 3141882

(43) Veröffentlichungstag der Anmeldung: 11.05.83
Patentblatt 83/19

(84) Benannte Vertragsstaaten: **FR GB NL**

(71) Anmelder: **AGFA-GEVAERT Aktiengesellschaft,
D-5090 Leverkusen 1 (DE)**

(72) Erfinder: **Wagensonner, Eduard, Eichenstrasse 1,
D-8011 Aschheim (DE)**
Erfinder: **Ruf, Wolfgang, Bayrischzeller Strasse 23,
D-8000 München 90 (DE)**
Erfinder: **Landsiedel, Thomas, Metzstrasse 25,
D-8000 München 80 (DE)**

(54) **Dynamische Schreib- und Lesespeichervorrichtung für digitale Bildpunktsignale.**

(57) Ein dynamischer Schreib- und Lesespeicher (RAM) für digitale Bildpunktsignale weist $n \times n \times 1$ bit Speicherplätze auf. Dieser Schreib-Lesespeicher ist unterteilt in eine erste Speicherhälfte für Speicherplatzpakete aller ungeraden Fernsehzeilen und in eine zweite Speicherhälfte für Speicherplatzpakete aller geraden Fernsehzeilen eines nach dem Zeilensprungverfahren dazustellenden Videobildes. Der Schreib- und Lesespeicher besteht aus einer von der Zahl der Signalabstufungen abhängigen Anzahl von RAM-Segmenten. Jedes RAM-Speichersegment weist mehrere hintereinander angeordnete zeilenweise und spaltenweise gleichzeitig adressierbare RAM-Chips auf. Deren Anzahl ist bestimmt durch die sogenannte minimale Zykluszeit des Lese- und Schreibvorganges sowie durch die Bildpunktzeit. Für die zeilenweise Auslesung und Wiedergabe von Bildpunktsignalen in Monitoren mit einer geringeren Zeilenanzahl wird in Abhängigkeit hiervon mittels einer Steuerschaltung jeweils mindestens ein gespeichertes Zeilenpaket übersprungen. Die der geringsten Auflösung zugeordneten, nacheinander auszulesenden Videozeilen-Speicherplatzpakete sind nur spaltenweise untereinander und die jeweils zu überspringenden Videozeilen-Speicherplatzpakete zeilenweise nebeneinander angeordnet.

AGFA-GEVAERT AG LEVERKUSEN
CAMERA-WERK MÜNCHEN
Patent- und Lizenzwesen

CW 2577.4 PC

21.10.81

51-vf-ni, 0557C

BEZEICHNUNG GEÄNDERT
siehe Titelseite

## Dynamische Schreib- und Lesespeichervorrichtung

Die Erfindung betrifft eine dynamische Schreib- und Lesespeichervorrichtung (Random Access Memory bzw. RAM) mit hoher Speicherkapazität für digitale Bildpunktsignale, die durch eine opto-elektronische Wandlereinrichtung über einen Analog-Digital-Wandler eingelesen und über einen Digital-Analog-Wandler ausgelesen werden.

Der Erfindung liegt die Aufgabe zugrunde, eine dynamische Schreib- und Lesespeichervorrichtung der eingangs genannten Art zu schaffen, die eine hohe Speicherkapazität mit einer hohen Bildpunktzahl je Zeile sowie mit einer hohen Zeilenanzahl aufweisen soll. Des weiteren soll der erfindungsgemäße Bildspeicher nicht nur in Verbindung mit hochauflösenden Monitoren verwendet werden, sondern auch an Standardmonitore mit einer demgegenüber geringeren Auflösung angeschlossen werden. Bei der Wiedergabe über Standard-Videogeräte soll ein Umladen der Videosignale des hochauflösenden Bildspeichers (Großbildspeicher) in Standard-Video-kompatible Speicher vermieden werden.

CW 2577.4 PC

Die Aufgabe wird erfindungsgemäß dadurch gelöst, daß der mit n x n x 1 bit Speicherplätzen versehene Schreib- und Lesespeicher unterteilt ist in eine erste Speicherhälfte für Speicherplatzpakete aller ungeraden Fernsehzeilen und in eine zweite Speicherhälfte für Speicherplatzpakete aller geraden Fernsehzeilen eines nach dem Zeilensprungverfahren darzustellenden Videobildes, daß der Schreib- und Lesespeicher aus einer von der Zahl der Signalabstufungen abhängigen Anzahl von RAM-Segmenten besteht, daß jedes RAM-Speichersegment mehrere hintereinander angeordnete zeilenweise und spaltenweise gleichzeitig adressierbare RAM-Chips aufweist, deren Anzahl bestimmt ist durch die sogenannte minimale Zykluszeit des Lese- oder Schreibvorganges sowie durch die Bildpunktzeit, daß für die zeilenweise Auslesung und Wiedergabe von Bildpunktsignalen in Monitoren mit einer geringeren Zeilenanzahl bzw. geringeren Auflösung in Abhängigkeit hiervon mittels einer Steuerschaltung jeweils mindestens ein gespeichertes Zeilenpaket übersprungen wird, und daß die der geringsten Auflösung zugeordneten, nacheinander auszulesenden Videozeilen-Speicherplatzpakete spaltenweise untereinander und die jeweils zu überspringenden Videozeilen-Speicherplatzpakete zeilenweise nebeneinander angeordnet sind. Hierbei ist n die Anzahl der Speicherplätze in einer Zeile bzw. einer Spalte des Lesespeichers.

Bekanntlich weisen RAM-Speicherchips eine sogenannte minimale Zykluszeit des Lese- oder Speichervorganges auf, die um einiges größer ist als die sogenannte Bildpunktzeit eines wiederzugebenden Videobildes. Dies bedeutet, daß Speicher mit hoher Speicherkapazität für die fernsehmäßige Aufbereitung und Wiedergabe eines Videobildes zu langsam sind. In vorteilhafter Weise werden daher mehrere Chips hintereinander bzw. nebeneinander angeordnet, die zeilenweise und spaltenweise nacheinander gleichzeitig angewählt bzw. abgerufen werden können. Bei Wahl einer Adresse eines RAM-Chips wird demnach auch die gleiche Adresse der anderen RAM-Chips angewählt.

Außerdem weist die erfindungsgemäße Speichervorrichtung den Vorteil auf, daß sämtliche Speicherplatzpakete der ungeraden Zeilen in einer Speicher-

CW 2577.4 PC

hälfte und sämtliche Speicherplatzpakete der geraden Zeilen in der anderen Speicherhälfte gespeichert werden. Beim Abrufen sämtlicher ungeraden Speicherplatzpakete während des ersten Lesezyklus und sämtlicher geraden Speicherplatzpakete im zweiten Lesezyklus ergibt sich der Vorteil, daß beim Abrufen jeder Zeile gleichzeitig deren Wiederauffrischung (refresh) erfolgt. Um die sogenannte Auffrischzeit stets zu unterschreiten, ist es vorteilhaft und zweckmäßig, daß die einzelnen Speicherzeilen in Spaltenrichtung gesehen schnell durchlaufen werden. Dies gilt auch beim Abrufen der entsprechenden Zeilen-Speicherplatzpakete für Monitore geringerer Auflösung. Da die der geringsten Auflösung zugeordneten, nacheinander auszulesenden Videozeilen-Speicherplatzpakete spaltenweise untereinander und die jeweils übersprungenen Videozeilen-Speicherplatzpakete zeilenweise nebeneinander angeordnet sind, wird zwar jedes einzelne abzurufende Videozeilen-Speicherplatzpaket mit geringerer Abtastgeschwindigkeit abgerufen. Durch die spaltenweise Untereinanderanordnung der Videozeilen-Speicherplatzpakete erfolgt jedoch auch in diesem Falle ein schnelles Durchlaufen bzw. Durchsteppen durch die einzelnen Speicher-Zeilen mit der Folgewirkung, daß die zulässige Auffrischzeit unterschritten wird. Diese Auffrischzeit ist die Zeit, in der einmal gespeicherte Signale ohne Signalverlust gespeichert bleiben. Durch Anlegen einer vollständigen Adresse werden im RAM nicht nur ein einziges Bit, sondern sämtliche Bits der angewählten RAM-Zeile wieder aufgefrischt.

Gemäß weiterer Ausbildung weist jedes Videozeilen-Speicherplatzpaket nur Speicherplätze in jeweils einer Spalte auf.

Gemäß weiterer Ausgestaltung ist die Anzahl der jeweils spaltenweise untereinander befindlichen Videozeilen-Speicherplatzpakete sowie der Grad der geringstmöglichen Auflösung und damit die Anzahl der nacheinander auszulesenden Videozeilen-Speicherplatzpakete der im Speicher vorhandenen bzw. gespeicherten Videozeilen-Speicherplatzpakete begrenzt durch die sogenannte Auffrischzeit (refresh) des dynamischen Schreib- und Lesespeichers.

Gemäß weiterer Ausbildung weist jedes RAM-Segment der Schreib- und Lesespeichervorrichtung ein Eingangsschieberegister sowie ein Ausgangsschieberegister auf, wobei das Eingangsschieberegister mit seinen parallelen Ausgängen mit den Signaleingängen der einzelnen RAM-Chips und das Ausgangsschieberegister mit seinen parallelen Eingängen mit den Signalausgängen der RAM-Chips verbunden ist.

Hierdurch ergibt sich der Vorteil, daß die insbesondere an den Ausgängen der RAM-Chips gleichzeitig auftretenden Bild-Signale im Takt der minimalen Zykluszeit des Speichers an das Schieberegister übergeben werden, welches wiederum im Takt der Bildpunktsignaldauer die Signale zur Weiterverarbeitung abgibt. Entsprechend der Anzahl der RAM-Chips wird also gegenüber der Zykluszeit mit entsprechend schnellerer Zeit ausgelesen.

Gemäß weiterer Ausbildung weist die Steuerschaltung mehrere jeweils einer bestimmten Bildauflösung eines Monitors zugeordnete Taktgeneratoren auf, die über Multiplex-Schaltstufen mit Synchronsteuerschaltungen und Zeilen-Spalten-Adressier-Generatorstufen verbindbar sind.

Im folgenden wird die Erfindung anhand eines in den Figuren 1 bis 3 dargestellten Ausführungsbeispieles beschrieben. Es zeigen:

Figur 1    eine schematische Darstellung des Schreib- und Lesespeichers mit peripheren Schaltungsteilen,

Figur 2    ein Schreib- und Lesespeichersegment und

Figur 3    eine Adressier-Steuerschaltung für den Bildspeicher.

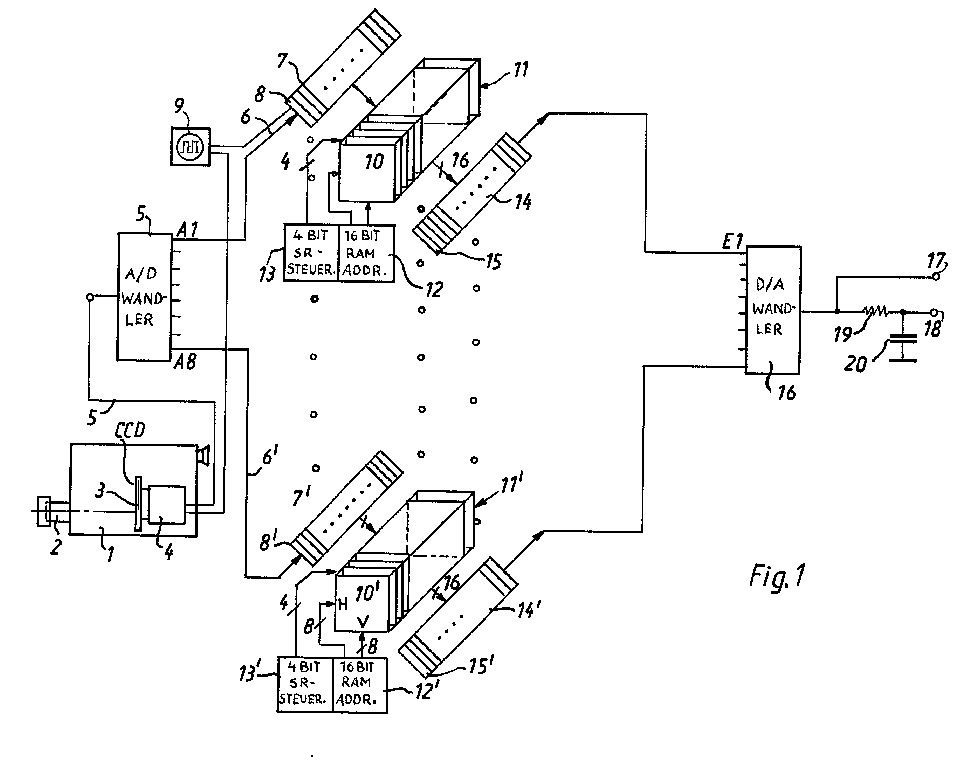

Gemäß Figur 1 ist mit 1 eine Kamera bezeichnet, durch deren Objektiv Bildsignale auf einen opto-elektronischen Wandler, insbesondere auf eine CCD-Zeile (Charged Couple Device), gelangen. Die CCD-Zeile ist mit 3 bezeichnet. Der CCD-Zeile 3 ist eine Signalverarbeitungsschaltung 4 nachgeordnet, von der eine Signalleitung 5 zum Eingang eines Analog-Digi-

CW 2577.4 PC

tal-Wandlers 5 führt. Der Analog-Digital-Wandler 5 weist acht parallele Ausgänge auf. Hieraus ergeben sich 256 Signalkombinationen. Diese 256 möglichen Signalkombinationen werden für die einzelnen Grau-Abstufungen jedes Bildpunktes ausgenutzt bzw. benötigt. Jeder der acht Ausgänge A1 bis A8 des Analog-Digital-Wandlers 5 ist über eine Seriensteuerleitung 6 mit dem Serieneingang eines Schieberegisters 7 verbunden, welches 16 Speicherplätze 8 aufweist. Der Takteingang des Schieberegisters ist mit einem Impulstaktgenerator 9 verbunden, dessen Frequenz gleich der Bildfrequenz der CCD-Zeile der Aufnahmekamera 1 ist.

Die 16 Ausgänge des Schieberegisters 7 sind mit 16 gleichartig aufgebauten und hintereinander angeordneten Schreib- und Lesespeicherchips 10 (RAM's) verbunden, die zusammen ein sogenanntes Speichersegment 11 bilden. Acht Zeilenadresseingänge H und acht Spaltenadresseingänge V führen zu einem 16 Bit-Schreib- und Lesespeicher-Adressier-Generator 12. Ein 4 Bit-Schieberegister-Steuerschaltung ist mit 13 bezeichnet. Diese 4 Bit-Schieberegister-Steuerschaltung steuert den Informationsfluß in die 16 einzelnen RAM-Chips 10. 16 Informationsausgänge der 16 RAM-Chips führen zu 16 Eingängen eines Parallel-Seriell-Schieberegisters 14, dessen 16 Registerstufen mit 15 bezeichnet sind. Ein serieller Ausgang des Schieberegisters 14 führt zu je einem Eingang eines Digital-Analog-Wandlers 16, dessen Analog-Ausgang einerseits direkt mit einem Videoausgang 17 (Hochauflösung) und andererseits über einen Tiefpaß, bestehend aus einem Widerstand 19 und einem Kondensator 20 mit einem Ausgang 18 für einen Monitor mit geringerer Bildauflösung, verbunden ist (Standard-Auflösung).

Die weiteren Ausgänge A2 bis A8 sind mit entsprechenden Schieberegistern und Schreib- und Lesespeichersegmenten (RAM-Bildspeichersegmenten) verbunden. Der Einfachheit halber sind nur die beiden Schieberegister und das dazwischen befindliche RAM-Segment des ersten Ausgangs A1 und letzten Ausganges A8 dargestellt. Zur Unterscheidung weisen die dort gezeigten entsprechenden Teile gleiche Bezugszeichen mit Indizes auf.

Der Schreib- und Lesebildspeicher gemäß Figur 1 ist für 1024 x 1024 Bildpunkte ausgelegt. In einem RAM-Speicherchip 10 befinden sich 256 x 256 Speicherplätze, die zusammen mit den Speicherplätzen der gleichartigen hintereinander angeordneten weiteren 15 RAM-Speicherchips die vorgenannte Bildpunktspeicherkapazität von $2^{20}$ Bits ergeben. Der Bildpunktspeicher ist so organisiert, daß jedes einzelne Bit eines Video-Datenwortes, welches in dem Analog-Digital-Wandler 5 in ein digitales Videosignal gewandelt worden ist, in dem 1024 x 1024 x1 Bit-Speichersegment abgelegt bzw. gespeichert wird. Wird an die Adresseingänge der in einem solchen Segment parallel geschalteten 16 RAM-Speicherchips eine Adresse gelegt (mit Hilfe der Schaltstufe 12), so erscheinen an den Ausgängen dieser 16 RAM-Chips parallel 16 Bits, die über das Parallel-Seriell-Schieberegister 14 unter dem Einfluß der Schieberegister-Steuerschaltung 13 nacheinander ausgelesen werden. Diese 16 seriell ausgelesenen Bildpunktsignale bilden zusammen mit den entsprechenden Bildpunktsignalen der sieben weiteren Schieberegister jeweils zusammen ein Video-Datenwort. Unter jeweils einer Adresse werden die Daten von 16 nebeneinanderliegenden Bildpunkten gespeichert. Für das Auslesen der 16 Bildpunkte wird eine 4 Bit-Schieberegister-Steuerschalunt benötigt, so daß in einem Chip nur noch ein Speicherumfang von 256 x 256 Speicherplätzen besteht ($2^{16}$). Diese Speicherplätze teilen sich auf in 256 RAM-Zeilen und in 256 RAM-Spalten.

Die CCD-Zeile wird mit Hilfe eines motorischen Antriebes über die Bildebene gefahren. Insgesamt ist eine Bildaufnahmezeit von 2 Sekunden für die 1024 x 1024 Bildpunkte sinnvoll. Hierbei wird die CCD-Zeile motorisch über die Bildebene bewegt. Mit Hilfe des Taktgenerators 9 wird dafür gesorgt, daß jedes digitale Bildpunktsignal im Schieberegister 7 innerhalb von 2 us weitergeschoben wird.

Geht man davon aus, daß jedes Video-Halbbild eine Zykluszeit von 20 ms benötigt, so wird bei videomäßiger Aufbereitung der Bildpunktsignale in einem entsprechenden Monitor für 1024 x 1024 Bildpunkte für ein ganzes Video-Bild eine Zykluszeit von 40 ms gebraucht. Jeder Bildpunkt benötigt eine Bildpunktzeit von 32 ns (unter Berücksichtigung der Dunkeltastzeiten).

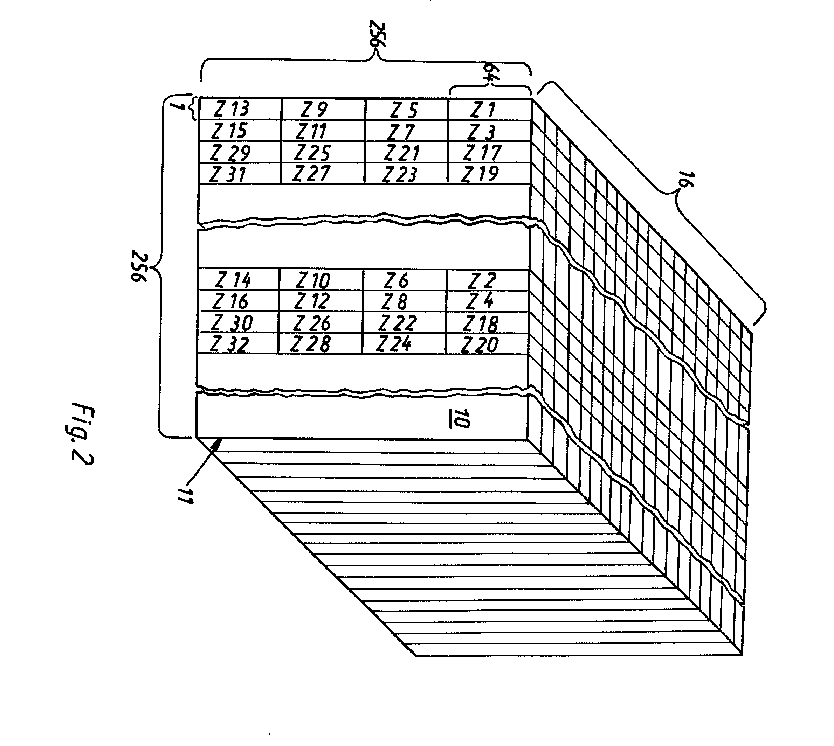

In Figur 2 ist ein RAM-Speichersegment 11 mit seinen 16 hintereinander angeordneten Speicherchips 10 dargestellt. Jedes Speicher-RAM-Chip weist 256 x 256 Speicherplätze auf ($2^{16}$ Speicherplätze). Jeweils 64 in einer Spalte untereinander angeordnete Speicherplätze eines RAM-Chips sind jeweils einer Videozeile zugeordnet. Da dies auch für die dahinter befindlichen RAM-Chips gilt, ergibt sich für jede Zeile eine Speicherplatzkapazität von 64 x 16 Speicherplätzen (1024 Speicherplätze).

Da ein Videobild nach dem Zeilensprungverfahren wiedergegeben wird, ist im vorliegenden Fall jedes RAM-Speicherchip in eine erste und in eine zweite Speicherhälte unterteilt. Die erste Hälfte jedes RAM-Chips ist den ungeraden Videozeilen und die zweite Hälfte den geraden Videozeilen zugeordnet.

Im vorliegenden Fall soll einmal mit Hilfe eines hochauflösenden Monitors ein hochauflösendes Videobild wiedergegeben werden, während im anderen Falle ein Videobild auf einem Monitor mit demgegenüber halber Auflösung wiedergegeben werden soll. Dies bedeutet, daß bei der Wiedergabe eines Videobildes mit halber Auflösung je eine gespeicherte Videozeile unberücksichtigt bleibt. Während also bei der Wiedergabe der vollen Speicherkapazität auf einem hochauflösenden Monitor zunächst jede erste, dritte, fünfte, usw. und im darauffolgenden Zyklus jede zweite, vierte, sechste, usw. Videozeile wiedergegeben wird, bleibt bei einer Wiedergabe mit halber Auflösung jede dritte, siebente, elfte, usw. und anschließend jede vierte, achte, zwölfte, usw. Speichervideozeile unberücksichtigt.

Bei der wahlweisen bzw. alternativen Wiedergabe eines Videobildes mit hoher Auflösung bzw. mit demgegenüber halber Auflösung ist folgenden Videozeilen-Speicherplatzpaket-Anordnung zweckmäßig. Die einzelnen Videozeilen-Speicherplatzpakete der mit halber Auflösung wiederzugebenden Videozeilen sind in jeweils einer Spalte untereinander angeordnet. Demnach sind in der jeweils ersten Spalte der 16 RAM-Chips jeweils 64 Speicherplätze für die erste Videozeile vorhanden. Dieses Videosignal-Speicherplatzpaket ist der ersten Zeile Z1 zugeordnet. Darunter befinden sich die Speicherplätze für das Speicherplatzpaket der Zeile Z5. Wiederum darunter befinden sich die Speicherplätze des Speicherplatzpaketes für die Zeile Z9. Das letzte Speicherplatzpaket dieser ersten Spalte ist der Zeile Z13 zugeordnet. In der zweiten, daran anschließenden Spalte des RAM's befinden sich untereinander die Speicherplatzpakete für die Zeilen Z3, Z7, Z11 und Z15. In der dritten Spalte befinden sich die Speicherplatzpakete der Zeilen Z17, Z21, Z25 und Z29. Daran anschließend sind die Speicherplatzpakete für die Zeilen Z19, Z23, Z27 und Z31 angeordnet. In der zweiten Speicherhälfte der hintereinander angeordneten RAM-Chips befinden sich in der ersten Spalte die Speicherplatzpakete für die Zeilen Z2, Z6, Z10 und Z14. In der Spalte daneben sind die Speicherplatzpakete für die Zeilen Z4, Z8, Z12 und Z16 vorgesehen. Wiederum daneben befinden sich die Speicherplatzpakete für die Zeilen Z18, Z22, Z26 und Z30. Daran anschließend befinden sich in der folgenden Spalte die Speicherplatzpakete für die Zeilen Z20, Z24, Z28 und Z32.

Diese Speicherplatzpaket-Anordnung in den einzelnen RAM-Chips weist den Vorteil auf, daß sowohl beim Abfragen und Wiedergeben der Signale der einzelnen Speicherplatzpakete mit hoher Auflösung als auch mit halber Auflösung die einzelnen RAM-Zeilen möglichst schnell durchgetastet bzw. durchgesteppt werden.

Bei der Wiedergabe am breitbandigen bzw. hochauflösenden Monitor wird demnach jede gespeicherte Original-Videozeile wiedergegeben, so daß unter Berücksichtigung des Zeilensprungverfahrens nach acht Videozeilen das RAM aufgefrischt ist. Bei jedem Abfragen bzw. Abtasten einer RAM-Zeile erfolgt nämlich eine sogenannte Auffrischung (refresh) der Speicherplätze in einer Zeile, was bei dynamischen Schreib- und Lesespeichern (RAM) notwendig ist. In jedem Falle muß bei einem solchen dynamsichen RAM der Auffrisch- bzw. Refresh-Vorgang mindestens einmal in 4 ms erfolgen. Dies bedeutet, daß mindestens einmal in 4 ms sämtliche RAM-Zeilenadressen angelegt werden müssen. Im vorliegenden Falle ist bei der hochauflösenden Wiedergabe das RAM in 8 x 40 µs (320 µs) durchgesteppt. Damit ist der Auffrischvorgang mit Sicherheit innerhalb der notwendigen Auffrischzeit erfolgt.

Für den Standard-Videobetrieb wird jeder Bildpunkt einer Videozeile ausgegeben, wobei allerdings am Ausgang der Schaltung die Bandbreite durch Filterung (Tiefpaß) begrenzt werden muß. Da jede zweite Original-Vidozeile ausgelassen wird, werden alle RAM-Zeilenadressen während einer Zeit von 4 x 64 µs (ca. 250 µs) angesprochen und damit aufgefrischt. Diese Zeit für einen Refresh-Zyklus liegt daher deutlich unterhalb der vorgegebenen Mindestzeit von 4 ms.

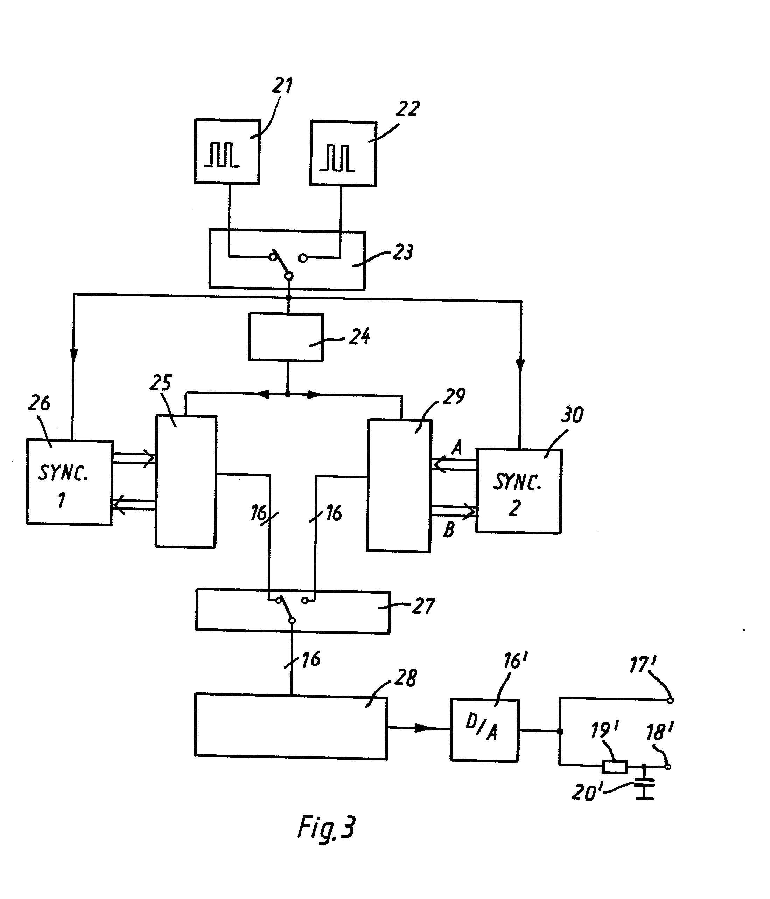

In Figur 3 sind die den Teilen gemäß Figur 1 entsprechenden Teile mit gleichen Bezugszeichen versehen. Zur Unterscheidung weisen sie jedoch Indizes auf. Mit 21 ist ein erster Taktgenerator bezeichnet, der eine Taktfrequenz von 33 MHz aufweist und bei der hochauflösenden Wiedergabe eines Videobildes wirksam ist. Mit 22 ist ein weiterer Taktgenerator bezeichnet, der eine Taktfrequenz von 20 MHz aufweist. Dieser Taktgenerator ist bei der Standard-Wiedergabe wirksam. Beide Taktgeneratoren sind mit einer Multiplexerschaltung 23 verbunden, die alternativ den Taktgenerator 21 oder den Taktgenerator 22 wirksam schaltet. Mit 24 ist eine 4 Bit-Steuerschaltung bezeichnet, die zuständig ist für die Parallel-Seriell-Steuerung der 16 hintereinander angeordneten RAM-Chips. Mit 25 ist eine 16 Bit-Adressierschaltung für die einzelnen RAM-Chips 10 bezeichnet. Diese Adressierschaltung 25 arbeitet mit einer Synchronisierungsschaltung 26 korrespondierend zusammen. Über den Kanal A erfolgt der Signalfluß von der Synchronisierungsschaltung 26 zur Adressierschaltung 25, während über den Kanal B die Rückmeldung von der Adressierschaltung 25 zur Synchronisierungsschaltung 26 erfolgt. Die Adressierschaltung 25 wird auch als Adresskette bezeichnet. Die Schaltungen 25 und 26 liefern die Synchronisationsimpulse für die horizontale Synchronisierung, für die vertikale Synchronisierung, für den horizontalen Austast-Impuls und für den vertikalen Austast-Impuls. Somit wird der genaue Startzeitpunkt einer jeden

CW 2577.4 PC

Videozeile und eines jeden Videohalbbildes festgelegt. Hierbei ist der Kanal A wirksam. Als Bestätigung erhält nun die Schaltung 26 über den Kanal B Bestätigungssignale, die das Ende einer Zeile und das Ende eines Halbbildes signalisieren.

Die 16 parallelen Ausgänge der RAM-Adresskette 25 sind mit einer Multiplexschaltung 27 verbunden, die wiederum mit den 16 Adresseingängen des RAM-Speichers 28 verbunden ist, welcher den acht Speichersegmenten 11 gemäß Figur 1 entspricht.

Für die Standardauflösung ist eine weiterer RAM-Adresskette 29 vorgesehen, der in entsprechender Weise über Kanäle A und B mit einer Synchronisierungsschaltung 30 verbunden ist. Mit den Steuersignalschaltungen 29 und 30 wird eine Steuerung für eine Standard-Bildauflösung ermöglicht. Mit diesen beiden Steuerschaltungen läßt sich auf einem Standard-Monitor das Bild mit Schwarzbalken oben und untern sauber positionieren. Mit Hilfe des Tiefpasses 19', 20' wird das höherfrequente Videosignal an die übliche Bandbreite eines Standard-Monitors angepaßt.

AGFA-GEVAERT AG LEVERKUSEN
CAMERA-WERK MÜNCHEN
Patent- und Lizenzwesen

CW 2577.4 PC                    '    21.10.81
                                    51-vf-ni, 0557C

<u>Ansprüche</u>

1. Dynamische Schreib- und Lesespeichervorrichtung (Random Access
   Memory bzw. RAM) mit hoher Speicherkapazität für digitale Bildpunktsignale, die durch eine opto-elektronische Wandlereinrichtung über
   einen Analog-Digital-Wandler eingelesen und über einen Digital-Ana-
   log-Wandler ausgelesen werden, <u>dadurch gekennzeichnet,</u> daß der mit
   n x n x 1 bit Speicherplätzen versehene Schreib-Lesespeicher (RAM)
   unterteilt ist in eine erste Speicherhälfte für Speicherplatzpakete
   aller ungeraden Fernsehzeilen und in eine zweite Speicherhälfte für
   Speicherplatzpakete aller geraden Fernsehzeilen eines nach dem Zeilensprungverfahren darzustellenden Videobildes, daß der Schreib- und
   Lesespeicher aus einer von der Zahl der Signalabstufungen abhängigen
   Anzahl von RAM-Segmenten besteht, daß jedes RAM-Speichersegment mehrere hintereinander angeordnete zeilenweise und spaltenweise gleichzeitig adressierbare RAM-Chips aufweist, deren Anzahl bestimmt ist
   durch die sogenannte minimale Zykluszeit des Lese- und Schreibvorganges sowie durch die Bildpunktzeit, daß für die zeilenweise Ausle-

CW 2577.4 PC

sung und Wiedergabe von Bildpunktsignalen in Monitoren mit einer geringeren Zeilenanzahl in Abhängigkeit hiervon mittels einer Steuerschaltung jeweils mindestens ein gespeichertes Zeilenpaket übersprungen wird, und daß die der geringsten Auflösung zugeordneten, nacheinander auszulesenden Videozeilen-Speicherplatzpakete spaltenweise untereinander und die jeweils zu überspringendenen Videozeilen-Speicherplatzpakete zeilenweise nebeneinander angeordnet sind.

2. Dynamische Schreib- und Lesespeichervorrichtung nach Anspruch 1, dadurch gekennzeichnet, daß jedes Videozeilen-Speicherplatzpaket nur Speicherplätze in jeweils einer Spalte aufweist.

3. Dynamische Schreib- und Lesespeichervorrichtung nach Anspruch 1 oder 2, dadurch gekennzeichnet, daß die Anzahl der in den RAM-Chips jeweils spaltenweise untereinander befindlichen Videozeilen-Speicherplatzpakete sowie der Grad der geringstmöglichen Auflösung und damit die Anzahl der nacheinander auszulesenden Videozeilen-Speicherplatzpakete der im Speicher vorhandenen bzw. gespeicherten Videozeilen-Speicherplatzpakete begrenzt ist durch die sogenannte Auffrisch-Zeit (refresh) des dynamischen Schreib- und Lesespeichers.

4. Dynamische Schreib- und Lesespeichervorrichtung nach einem der vorhergehenden Ansprüche, dadurch gekennzeichnet, daß jedes RAM-Segment der Schreib- und Lesespeichervorrichtung ein Eingangs-Schieberegister sowie ein Ausgangs-Schieberegister aufweist und daß das Eingangs-Schieberegister mit seinen parallelen Ausgängen mit den Signaleingängen der einzelnen Chips und das Ausgangs-Schieberegister mit seinen parallelen Eingängen mit den Signalausgängen der RAM-Chips verbunden ist.

5. Dynamische Schreib- und Lesespeichervorrichtung nach einem der vorhergehenden Ansprüche, dadurch gekennzeichnet, daß die Steuerschaltung mehrere jeweils einer bestimmten Bildauflösung eines Monitors

CW 2577.4 PC

zugeordnete Taktgeneratoren aufweist, die über Multiplex-Schaltstufen mit Synchronsteuerschaltungen und Zeilen-Spalten-Adressier-Generator-Stufen verbindbar sind.


**Hierzu 3 Blatt Zeichnungen**


CW 2577.4 PC

Fig.1

Fig. 2

0078441

3/3

Fig.3